(19) **Europäisches Patentamt**
**European Patent Office**
**Office européen des brevets**

(11) **EP 1 577 693 B1**

(12) **EUROPÄISCHE PATENTSCHRIFT**

(45) Veröffentlichungstag und Bekanntmachung des Hinweises auf die Patenterteilung:
**13.07.2011 Patentblatt 2011/28**

(51) Int Cl.:
***G02B 7/02*** *(2006.01)*

(21) Anmeldenummer: **05002562.6**

(22) Anmeldetag: **08.02.2005**

(54) **Objektiv mit wenigstens einem optischen Element**

Objective comprising at least one optical element

Objectif avec au moins un élément optique

(84) Benannte Vertragsstaaten:
**DE NL**

(30) Priorität: **26.02.2004 DE 102004009240**

(43) Veröffentlichungstag der Anmeldung:
**21.09.2005 Patentblatt 2005/38**

(73) Patentinhaber: **Carl Zeiss SMT GmbH**
**73447 Oberkochen (DE)**

(72) Erfinder:
• **Rau, Johannes**
**89547 Gerstetten (DE)**

• **Schöppach, Armin**
**73431 Aalen (DE)**
• **Weber, Ulrich**
**89073 Ulm (DE)**

(74) Vertreter: **Lorenz, Werner**
**Lorenz & Kollegen**
**Patentanwälte Partnerschaftsgesellschaft**
**Alte Ulmer Strasse 2**
**89522 Heidenheim (DE)**

(56) Entgegenhaltungen:
**WO-A-03/040785     DE-A1- 19 901 295**
**US-A- 5 822 136     US-B1- 6 229 657**
**US-B1- 6 239 924**

Printed by Jouve, 75001 PARIS (FR)

**Beschreibung**

Die Erfindung betrifft ein Objektiv mit wenigstens einem optischen Element, das in einem Innenring gelagert ist, wobei der Innenring mit einer Außenfassung verbunden ist, und mit einer Manipulatoreinrichtung zur Verschiebung des optischen Elements in wenigstens eine Richtung, die senkrecht oder in einem beliebigen Winkel zur optischen Achse liegt, wobei der Innenring über wenigstens zwei Verstellgelenke mit Manipulatorgliedern und wenigstens einem Drehgelenk mit der Außenfassung verbunden ist, wobei die wenigstens zwei Verstellgelenke und das wenigstens eine Drehgelenk mit wenigstens annähernd in tangentialer Richtung zum Innenring verlaufenden Gelenkarmen versehen sind, über die der Innenring elastisch mit der Außenfassung verbunden ist.

Ein Objektiv dieser Art mit einer Manipulatoreinrichtung ist aus der DE 199 01 295 A1 bekannt.

Mit einer derartigen Manipulatoreinrichtung soll die optische Abbildungsqualität eines Objektives verbessert werden. Zum Ausgleich von Fertigungstoleranzen in einem Objektiv wird ein optisches Element weggesteuert definiert mit einer Konstruktion, die bezüglich Kraftfluss und Steifigkeit optimiert ist, in eine Richtung verschoben, die senkrecht oder auch in einem beliebigen Winkel zur optischen Achse liegt.

Außenfassung, Innenring und Manipulatoreinrichtung bilden dabei eine Einheit, insbesondere wenn Innenring und Außenfassung einstückig sind. Mit den Manipulatorgliedern lässt sich eine elastische bzw. nachgiebige Verbindung zwischen der Außenfassung und dem Innenring schaffen, wobei eine Nachgiebigkeit bzw. Verschiebemöglichkeit in x- und y-Richtung erreicht wird, gleichzeitig jedoch eine hohe Steifigkeit in z-Richtung, d.h. in Richtung der optischen Achse, gegeben ist.

Bei einer Erwärmung des optischen Elements, z.B. einer Linse, ergibt sich das Problem, dass die Wärme aufgrund der wenigen und schmalen Verbindungsstellen zu der Außenfassung über die Gelenkarme nur schlecht abgeleitet werden kann. Dies bedeutet, es können Temperaturunterschiede zwischen dem optischen Element mit seiner Innenfassung und der Außenfassung entstehen, was sich nachteilig auf die Abbildungsqualität auswirken kann. Insbesondere Längenänderungen der Gelenkarme aufgrund Temperaturänderungen führen zu einer relativen Verschiebung des Innenrings gegenüber der Außenfassung in der x-y-Ebene. Diese Verschiebung basiert im wesentlichen auf der Anlenkung der Gelenkarme der Verstellgelenke am Innenring und deren Längserstreckung. Die daraus resultierende Verschiebung des Innenrings quer zur z-Achse führt zu Aberrationen, insbesondere zu Koma.

Der vorliegenden Erfindung liegt daher die Aufgabe zugrunde, ein Objektiv mit wenigstens einem optischen Element durch eine entsprechende Lagerung des optischen Elements derart zu verbessern, dass keine Aberrationen auftreten, insbesondere nicht bei Temperaturunterschieden.

Erfindungsgemäß wird diese Aufgabe dadurch gelöst, dass die wenigstens annähernd in tangentialer Richtung zum Innenring verlaufenden Gelenkarme von den Enden der Gelenkarme aus gesehen, welche an dem Innenring angelenkt sind, alle in Richtung des Uhrzeigersinns oder alle entgegen der Richtung des Uhrzeigersinns gerichtet sind und so temperaturbedingte Längenänderungen der Gelenkarme in eine einheitliche Verdrehrichtung des Innenringes gegenüber der Außenfassung um annähernd die Mitte des optischen Elements umgesetzt werden.

Durch die erfindungsgemäße Anordnung der Gelenkarme und deren Anlenkung am Innenring führen nunmehr unvermeidliche Längenänderungen bei Temperaturunterschieden nicht mehr zu einer Verschiebung des optischen Elements, sondern nur noch zu einer Verdrehung um die Linsenmitte. Reine Verdrehungen eines optischen Elements sind im allgemeinen im Vergleich zu Verschiebungen gegenüber der z-Achse wesentlich unproblematischer. Bei einer Linse als optischem Element führt eine Verdrehung im allgemeinen zu keinen Qualitätseinbußen bezüglich der Abbildungsqualität des Objektives.

In einer sehr vorteilhaften und nicht naheliegenden Weiterbildung der Erfindung kann vorgesehen sein, dass das wenigstens eine Drehgelenk ebenfalls als Verstellgelenk mit einem Manipulatorglied ausgebildet ist. Dabei können dann alle Verstellgelenke in vorteilhafter Weise symmetrisch am Umfang des Innenrings verteilt, insbesondere in einem Abstand von 120°, angeordnet sein.

Durch die Ausbildung aller drei Gelenke als Verstellgelenke ergeben sich bessere Verstellmöglichkeiten. Darüber hinaus liegt in diesem Falle keine Vorzugsrichtung mehr vor. Dies bedeutet, das ganze System wird damit steifer und zwar gleichmäßig in alle Richtungen.

Wenn die drei Verstellgelenke in der angegebenen Art bzw. symmetrisch angeordnet sind, liegen bei einer Manipulation die Drehpunkte jeweils deutlich weiter von der z-Achse entfernt und damit deutlich außerhalb des optischen Elements. Daraus resultiert ein wesentlich größerer Verstellradius, der sich bei den geringen Verstellwegen, welche im Mikrometerbereich liegen, in einer stärkeren Linearität auswirkt.

Vorteilhafte Weiterbildungen und Ausgestaltungen ergeben sich aus den übrigen Unteransprüchen und aus den anhand der Zeichnung prinzipmäßig beschriebenen Ausführungsbeispielen.

Es zeigt:

Figur 1    eine schematische Draufsicht auf eine Linse als optisches Element eines Objektives mit einer Lagerung nach dem Stand der Technik;

Figur 2        eine Linse als optisches Element eines Objektives nach der Figur 1 mit einer erfindungsgemäßen Lagerung;

Figur 3a      ein optisches Element eines Objektives mit einer zweiten erfindungsgemäßen Lagerung;

Figur 3b      das optische Element nach der Figur 3a mit eingezeichneten Verschiebevektoren; und

Figur 4        eine vergrößerte Darstellung einer Lagerungsart mit diskreten Festkörpergelenken.

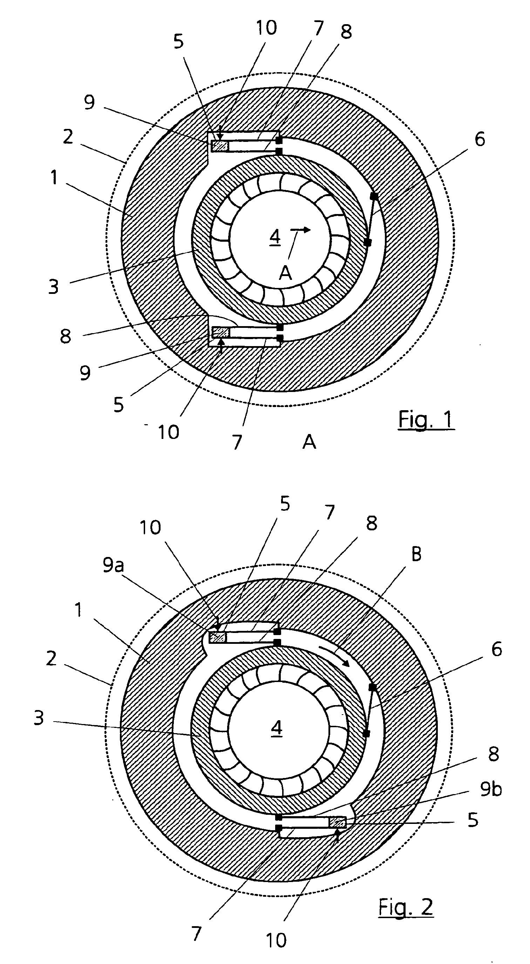

Die Figur 1 zeigt in einer Draufsicht jeweils eine Außenfassung 1, welche in einem nur prinzipmäßig gestrichelt dargestellten Gehäuse eines Objektives 2 angeordnet ist. Im Inneren der Außenfassung 2 befindet sich ein Innenring 3, der eine Linse 4 als optisches Element in nicht näher dargestellter Weise trägt. Die Verbindung zwischen dem Innenring 3 und der Außenfassung 1 erfolgt über zwei Verstellgelenke 5, die sich gegenüberliegend angeordnet sind und ein Drehgelenk 6. Während das Drehgelenk 6 aus nur einem Gelenkarm besteht, der an seinen beiden Enden jeweils mit dem Innenring 3 und der Außenfassung 1 verbunden ist, besitzen die beiden Verstellgelenke 5 jeweils zwei Gelenkarme 7 und 8, die an ihren beiden freien Enden über ein Verstellteil 9 miteinander verbunden sind. Mit dem jeweils von dem Verstellteil 9 abgewandten Ende des Gelenkarmes 7 bzw. 8 ist dieser mit der Innenfassung 3 bzw. mit der Außenfassung 1 verbunden.

Zur Verschiebung des Innenringes 3 gegenüber der Außenfassung 1 greifen nun Aktuatoren 10, welche in der Figur 1 vereinfacht nur durch Pfeile dargestellt sind, an den Verstellteilen 9 an.

Durch die Anordnung der Gelenkarme ergeben sich zwei Drehpole in den Schnittpunkten der Tangenten der Anbindungsstellen. Bei Betätigung der Verstellteile dreht sich der Innenring 3 um den jeweils korrespondierenden Drehpol, wobei die Drehung aufgrund des großen Radiuses und des kleinen Stellweges im Mikrometerbereich als lineare Bewegung des optischen Elementes angesehen werden kann.

Bezüglich näherer Einzelheiten wird auf die DE 199 01 295 A1 verwiesen, die ebenfalls den Offenbarungsgehalt der vorliegenden Anmeldung bildet.

Bei der Ausgestaltung nach dem Stand der Technik erstrecken sich die beiden Gelenkarme 8 von dem Innenring 3 aus, an welchem sie mit einem Ende angelenkt sind, in die gleiche Richtung (bei der gewählten Darstellung in Richtung der negativen x-Achse). Führen nun Temperaturunterschiede zwischen der Linse 4 und dem damit verbundenen Innenring 3 zu einer Längenänderung der Gelenkarme 8, so führt dies zu einer Verschiebung des Innenringes 3 gegenüber der Außenfassung 1 in x-Richtung (siehe Pfeil A). Die Folge daraus sind Aberrationen und Koma.

Demgegenüber zeigt die Figur 2 eine Anbindung der Gelenkarme 8 an den Innenring 3, bei der keine Verschiebung des Innenringes 3 gegenüber der Außenfassung 1 auftritt, sondern lediglich eine Verdrehung in Pfeilrichtung B um die Mitte des optischen Elementes.

Wie ersichtlich, liegen die Längserstreckungen der beiden Gelenkarme 8 - ausgehend von ihren jeweiligen Anbindungsstellen an dem Innenring 3 - in entgegengesetzter Richtung. Während sich der in der Zeichnung obere Gelenkarm 8 von seiner Anbindungsstelle an dem Innenring 3 aus nach links zu dem Verstellteil 9a erstreckt, erstreckt sich der in der Zeichnung untere Gelenkarm 8 in die positive x-Richtung von seiner tangentialen Anbindung aus an dem Innenring 3 in Richtung zu dem Verstellteil 9b. Des weiteren erstreckt sich der Gelenkarm 6 von seiner Anbindungsstelle am Innenring 3 aus nach oben zur Außenfassung 1. Durch die geeignete Auslegung der Länge des Gelenkarmes 6 in Abhängigkeit der Längen der Gelenkarme 8 und der typischen Temperaturverteilungen, kann erreicht werden, dass sich der Innenring 3 bei Temperaturänderung um die Mitte des optischen Elementes dreht und sich lateral nicht verschiebt.

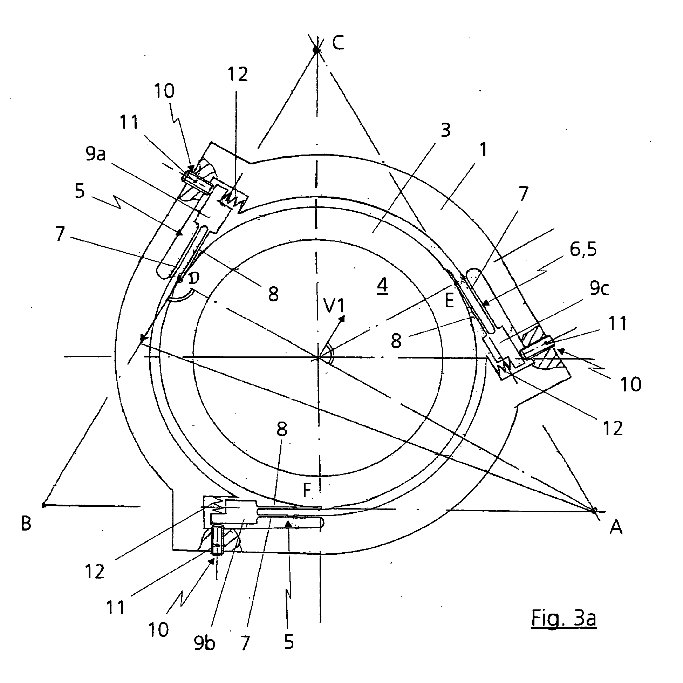

Die Figur 3a zeigt eine sehr vorteilhafte Weiterbildung der Erfindung. Wie ersichtlich, ist dabei das Drehgelenk 6 gemäß den Figuren 1 und 2 ebenfalls als Verstellgelenk 5 mit zwei Gelenkarmen 7 und 8 und einem dazwischenliegenden Verstellteil 9c ausgebildet. Gleichzeitig ist die Verteilung der drei Verstellgelenke 5 symmetrisch am Umfang in einem Abstand von 120° vorgenommen worden.

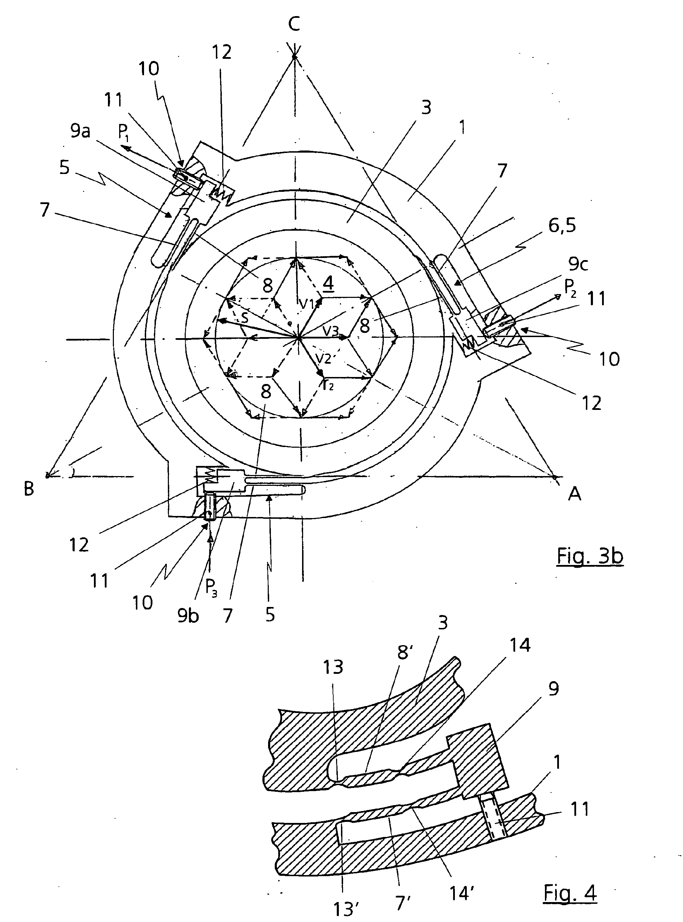

Die Verstellung des Innenringes 3 gegenüber der Außenfassung 1 erfolgt in ähnlicher Weise wie bei der Figur 2, allerdings nunmehr jedoch derart, dass keine Vorzugsrichtung mehr vorhanden ist. Werden z.B. die beiden Verstellteile 9b und 9c festgehalten, ergibt sich für den Innenring 3 ähnlich wie bei der Lagerung nach dem Stand der Technik ein Momentandrehpol A. Mit Betätigung des Manipulators 10 am Stellhebel 9a kann dann eine Verschiebung des Innenringes 3 in Richtung von $v_1$ aufgebracht werden. Werden die Verstellteile 9a und 9b festgehalten, ergibt sich analog zum Drehpol A für den Innenring 3 der Drehpol B. Mit der Betätigung des Manipulators 10 am Verstellteil 9c kann somit eine Verschiebung des Innenrings 3 in Richtung $v_2$ erreicht werden (siehe Figur 3b). Werden die Verstellteile 9a und 9c festgehalten, ergibt sich für den Innenring 3 analog zu den Drehpolen A und B ein Momentandrehpol C. Mit dem Manipulator 10 am Verstellteil 9b kann dann auf den Innenring 3 eine Verschiebung in Richtung von $v_3$ (siehe Figur 3b) aufgebracht werden.

Aus der Figur 3b ist auch ersichtlich, dass die Verschiebevektoren $v_1$, $v_2$ und $v_3$ nur den Betrag von $s/(2 \cdot \cos 30°)$ $\approx 0{,}58 \cdot s$ haben müssen, um in Vektoraddition ein Sechseck aufzuspannen, das den kreisförmigen Stellbereich mit dem Radius s umfasst.

Der Stellweg $p_1$ am Verstellteil 9a, der die Deformation und die Spannungen in den Gelenkarmen 8 bestimmt, lässt sich aus der geforderten Mindestuntersetzung $i_{mind}$ und dem Verschiebevektor $v_1$ bestimmen.

$$P_1/v_1 = i_{mind} \text{ (herkömmlicher xy-Manipulator)}$$

$$P_1 = i_{mind} \cdot s/(2 \cdot \cos30°) \approx 0{,}58 \cdot i_{mind} \cdot s$$

(xy-Manipulator nach Fig. 3a,3b)

Der Stellweg $p_1$ am Verstellteil 9a beträgt etwa 60 % des Stellwegs am herkömmlichen xy-Manipulator. Gleiches gilt für die Stellwege $p_2$ und $p_3$ an den Verstellteilen 9b und 9c.

Werden in den Gelenkarmen 8 die gleichen Spannungen wie beim Stand der Technik zugelassen, kann die Länge der Gelenkarme 8 auf etwa das 0,58-fache verkürzt werden, wodurch sich die Lateralsteifigkeit der Innenringanbindung auf mindestens das 1,7fache erhöht.

Durch diese Maßnahme kann auch die Eigenfrequenz erhöht werden, mit der der Innenring 3 mitsamt der Linse 4 gegenüber der Außenfassung 1 schwingt.

Zu den beiden oben genannten Effekten kommt die günstigere Belastung der Gelenkarme 8 bei der Verstellung hinzu, da z.B. für das Verstellteil 9a die Verschiebung für den Angriffspunkt D des Gelenkarms 8 am Innenring 3 senkrecht zur Verbindungsgeraden vom Angriffspunkt D zum Momentandrehpol A des Innenrings 3 erfolgt. Der Gelenkarm 8 wird daher durch keine zusätzliche Querdeformation wie bei der Lösung nach dem Stand der Technik belastet.

Das Gleiche gilt auch für die Gelenkarme 8 der Verstellteile 9b und 9c bei Drehungen um die Momentandrehpole B und C mit den Angriffspunkten E und F.

Wie ersichtlich, liegen die Drehpole A, B und C im Vergleich zu der Lösung nach dem Stand der Technik deutlich weiter außerhalb und ergeben damit deutlich größere Radien. Dies bedeutet, die Quasi-Linearität bei Verschiebungen des Innenringes 3 gegenüber der Außenfassung 1 wird ebenfalls deutlich erhöht.

Dadurch, dass keine Vorzugsrichtung bei Verstellungen mehr vorhanden ist, wird das gesamte System gegen Eigenschwingungen steifer.

Im Vergleich zu einer Verschiebung des Innenringes 3 beim Stand der Technik gegenüber der Außenfassung 1 bei Temperaturänderungen quer zur z-Achse ergibt sich - wie erwähnt - durch die Umsetzung der Längenänderungen der Gelenkarme in eine einheitliche Verdrehrichtung nur eine entsprechende Verdrehung des Innenringes 3 gegenüber der Außenfassung 1 um die Mitte des optischen Elementes ohne Verschiebungen. Verdrehungen dieser Art führen jedoch in der Regel nicht zu Aberrationen, insbesondere nicht bei einer Linse 4 als optischem Element.

In einer sehr vorteilhaften Weise lässt sich das optische Element 4 mit der erfindungsgemäßen Lagerung bei einem Projektionsobjektiv in der Mikrolithographie zur Herstellung von Halbleiterelementen einsetzen.

Die Gelenkarme 7 und 8 können jeweils als Blattfedern ausgebildet sein, an deren jeweils freien Ende das Verstellteil 9a, 9b bzw. 9c liegt, über das die beiden Blattfedern 7 und 8 miteinander verbunden sind.

Ebenso wie bei dem Ausführungsbeispiel nach der Figur 2 sind bei dem Ausführungsbeispiel nach der Figur 3a/3b hier die Gelenkarme bzw. Blattfedern 8 so an den Innenring 3 angelenkt, dass Längenänderungen der Gelenkarme 8 in eine einheitliche Verdrehrichtung des Innenringes 3 gegenüber der Außenfassung 1 umgesetzt werden. In dem in der Figur 3a dargestellten Ausführungsbeispiel bedeutet dies, die Angriffspunkte D, E und F bzw. die Anbindungsstellen an dem Innenring 3 sind so gewählt, dass sich tangential von dort aus die Gelenkarme 8 im Uhrzeigersinn aus vom Innenring 3 weggerichtet sind. Selbstverständlich ist auch die umgekehrte Anordnung möglich, wobei dann selbstverständlich alle drei Gelenkarme wiederum die gleiche Richtung aufweisen müssen.

Die Manipulatoren 10 können jeweils eine Verstellschraube 11 aufweisen, die in die Außenfassung 1 eingeschraubt ist. Mit ihren freien Enden greifen Verstellschrauben 11 an den Verstellteilen 9a, 9b und 9c an und führen für diese bei einer entsprechenden Verstellung der Verstellschrauben 11 zu einer entsprechenden Verschiebung, wie bereits erläutert. Als Rückstellelemente für die Verstellteile 9a, 9b und 9c dienen Federelemente 12. Die Federelemente 12 greifen auf der von den Verstellschrauben 11 abgewandten Seite jeweils an den Verstellteilen 9a, 9b bzw. 9c an und stützen sich auf der anderen Seite an der Außenfassung 1 ab.

In der Figur 4 ist ausschnittsweise in vergrößerter Darstellung ein Verstellgelenk 5 dargestellt, wobei die Gelenkarme 7 und 8 anstelle in Form von Blattfedern als Gelenkarme mit diskreten Festkörpergelenken 7' und 8' ausgebildet sind. Wie ersichtlich, besitzt der Gelenkarm 8' zwei Einschnürungen 13 und 14, welche im Abstand voneinander angeordnet sind. Die Einschnürung 13 stellt die Gelenkstelle mit dem Innenring 3 dar, während die Einschnürung 14 die Verbindung zu der Außenfassung 1 herstellt. In gleicher Weise ist die den Gelenkarm 7 bildende Blattfeder durch einen Gelenkarm 7' mit diskreten Gelenken ersetzt. Der Gelenkarm 7' besitzt ebenfalls zwei Einschnürungen 13' und 14' und ist an einem Ende mit der Außenfassung 1 und am anderen Ende mit dem Verstellteil 9 verbunden. Aufgrund ihres geringen Querschnittes stellen die beiden Einschnürungen 13 und 14 gelenkige Anlenkungen dar.

Der Vorteil der diskreten Festkörpergelenke 13, 13', 14 und 14' gegenüber den Blattfedern liegt darin, dass in tangentialer Richtung eine größere Steifigkeit erreicht wird, wobei jedoch gleichzeitig eine größere Beweglichkeit in radialer Richtung geschaffen wird. Je länger die Gelenkarme 7' und 8' sind bzw. je weiter die beiden Einschnürungen 13, 13' und 14, 14' auseinander liegen, desto größer wird die Beweglichkeit in radialer Richtung, wobei jedoch keine Steifigkeitsverluste in tangentialer Richtung auftreten. Ein weiterer Vorteil besteht darin, dass die Einschnürungen 13 bzw. 13' und 14 bzw. 14' als Gelenkstellen dünner ausgearbeitet werden können im Vergleich zu der Ausgestaltung der Gelenkarme 7 und 8 als Blattfedern, womit ebenfalls noch eine radial weichere Anbindung bei hoher tangentialer Steifigkeit erreicht wird.

Bei dem in der Figur 4 dargestellten Ausführungsbeispiel sind beide Gelenkarme 7' und 8' mit Festkörpergelenke in Form von Einschnürungen 13 bzw. 13' und 14 bzw. 14' versehen. Selbstverständlich kann es im Bedarfsfalle auch ausreichend sein, dass nur eine der beiden Gelenkarme, z.B. der innere Gelenkarm 8, durch ein Festkörpergelenk 8' ersetzt ist, während der Gelenkarm 7 als Blattfeder ausgebildet bleibt. Auch ist es denkbar, dass pro Gelenkarm nur eine Einschnürung vorgesehen wird.

## Patentansprüche

1. Objektiv (2) mit wenigstens einem optischen Element (4), das in einem Innenring (3) gelagert ist, wobei der Innenring (3) mit einer Außenfassung (1) verbunden ist, und mit einer Manipulatoreinrichtung (10) zur Verschiebung des optischen Elements (4) in wenigstens eine Richtung die senkrecht oder in einem beliebigen Winkel zur optischen Achse liegt , wobei der Innenring (3) über wenigstens zwei Verstellgelenke (5) mit Manipulatorgliedern (10) und wenigstens ein Drehgelenk, mit der Außenfassung verbunden ist, wobei die wenigstens zwei Verstellgelenke (5) und das wenigstens eine Drehgelenk (6) mit wenigstens annähernd in tangentialer Richtung zum Innenring (3) verlaufenden Gelenkarmen (8) versehen sind, über die der Innenring (3) elastisch mit der Außenfassung (1) verbunden ist, **dadurch gekennzeichnet, dass** die wenigstens annähernd in tangentialer Richtung zum Innenring (3) verlaufenden Gelenkarme (8) von den Enden der Gelenkarme (8) aus gesehen, welche an dem Innenring (3) angelenkt sind, alle in Richtung des Uhrzeigersinns oder alle entgegen der Richtung des Uhrzeigersinns gerichtet sind und so temperaturbedingte Längenänderungen der Gelenkarme (8) in eine einheitliche Verdrehrichtung des Innenringes (3) gegenüber der Außenfassung (1) um annähernd die Mitte des optischen Elementes umgesetzt werden.

2. Objektiv nach Anspruch 1, **dadurch gekennzeichnet, dass** das wenigstens eine Drehgelenk (6) ebenfalls als Verstellgelenk (5) mit einem Manipulatorglied (10) ausgebildet ist.

3. Objektiv nach Anspruch 2, **dadurch gekennzeichnet, dass** drei am Umfang des Innenringes (3) verteilt angeordnete Verstellgelenke (5) vorgesehen sind.

4. Objektiv nach Anspruch 3, **dadurch gekennzeichnet, dass** die Verstellgelenke (5) im Abstand von 120° am Umfang verteilt angeordnet sind.

5. Objektiv nach Anspruch 1, **dadurch gekennzeichnet, dass** das wenigstens eine Drehgelenk (6) ebenfalls als Verstellgelenk (5) mit einem Manipulatorglied (10) und mit Gelenkarmen (7,8) ausgebildet ist.

6. Objektiv nach einem der Ansprüche 1 bis 5, **dadurch gekennzeichnet, dass** die Gelenkarme (7,8) als Blattfedern ausgebildet sind.

7. Objektiv nach Anspruch 6, **dadurch gekennzeichnet, dass** jedes Verstellgelenk (5) mit wenigstens zwei Blattfedern (7,8) mit einem dazwischenliegenden Verstellteil (9a,9b,9c) versehen ist.

8. Objektiv nach Anspruch 7, **dadurch gekennzeichnet, dass** eine Blattfeder (8) an dem Innenring (3) und eine zweite Blattfeder (7) an der Außenfassung (1) angelenkt ist.

9. Objektiv nach Anspruch 8, **dadurch gekennzeichnet, dass** die beiden Blattfedern (7,8) wenigstens annähernd parallel zueinander liegen.

10. Objektiv nach einem der Ansprüche 1 bis 5, **dadurch gekennzeichnet, dass** die Verstellgelenke (5) und ihre Gelenkarme mit diskreten Festkörpergelenken (13,13',14,14') versehen sind.

11. Objektiv nach Anspruch 10, **dadurch gekennzeichnet, dass** ein Festkörpergelenk (13) an dem Innenring (3) und das zweite Festkörpergelenk (13') an der Außenfassung (1) angelenkt ist.

12. Objektiv nach Anspruch 11, **dadurch gekennzeichnet, dass** die Festkörpergelenke (13,13',14,14') jeweils als Einschnürungen ausgebildet sind.

13. Objektiv nach einem der Ansprüche 1 bis 12, **dadurch gekennzeichnet, dass** die Manipulatorglieder (10) in der Außenfassung (1) angeordnet sind.

14. Objektiv nach Anspruch 13, **dadurch gekennzeichnet, dass** die Manipulatorglieder (10) jeweils an einem Verstellteil (9a,9b,9c) angreifen.

15. Objektiv nach Anspruch 14, **dadurch gekennzeichnet, dass** die Manipulatorglieder (10) mit in der Außenfassung (1) angeordneten Verstellschrauben (11) versehen sind, die an den Verstellteilen (9a,9b,9c) angreifen.

16. Objektiv nach Anspruch 15, **dadurch gekennzeichnet, dass** die Verstellteile (9a,9b,9c) mit gegen die Verstellrichtung der Verstellschrauben (11) wirkenden Rückstellelementen (12) versehen sind.

17. Objektiv nach Anspruch 16, **dadurch gekennzeichnet, dass** die Rückstellelemente (12) als Federelemente ausgebildet sind.

18. Objektiv nach einem der Ansprüche 1 bis 17, **dadurch gekennzeichnet, dass** es als Projektionsobjektiv in der Mikrolithographie ausgebildet ist.

19. Objektiv nach einem der Ansprüche 1 bis 18, **dadurch gekennzeichnet, dass** das optische Element als Linse (4) oder Spiegel ausgebildet ist.

**Claims**

1. An objective (2) comprising at least one optical element (4) mounted in an inner ring (3), said inner ring (3) being connected to an outer mount (1), and a manipulator (10) for displacing the optical element (4) in at least one direction perpendicular or in an arbitrary angle to the optical axis, the inner ring (3) being connected by means of at least two adjusting joints (5) with manipulation members (10) and by means of at least one swivel joint (6) with the outer mount, the at least two adjusting joints (5) and the at least one swivel joint (6) being provided with joint arms (8) running at least roughly in a direction tangential to the inner ring (3), the inner ring (3) being elastically connected with the outer mount (1) by means of the joint arms (8), **characterized in that** the joint arms (8) running at least roughly in a direction tangential to the inner ring (3) are directed, seen from the end of the joint arms (8) being articulated at the inner ring (3), all clockwise or all counter clockwise thereby converting temperature-induced changes in length changes of said joint arms (8) in a uniform rotational direction of the inner ring (3) relative to the outer mount (1) around roughly the center of the optical element.

2. The objective as claimed in claim 1, **characterized in that** the at least one swivel joint (6) is likewise formed as an adjusting joint (5) with a manipulator member (10).

3. The objective as claimed in claim 2, **characterized in that** three adjusting joints (5) are provided, arranged such that they are distributed around the circumference of said inner ring (3).

4. The objective as claimed in claim 3, **characterized in that** said adjusting joints (5) are arranged such that they are distributed around the circumference at intervals of 120°.

5. The objective as claimed in claim 1, **characterized in that** the at least one swivel joint (6) is formed as an adjusting joint (5) with a manipulator member (10) and with joint arms (7, 8).

6. The objective as claimed in any of claims 1 to 5, **characterized in that** said joint arms (7, 8) are formed as leaf springs.

**7.** The objective as claimed in claim 6, **characterized in that** each adjusting joint (5) is provided with at least two leaf springs (7,8) with an adjusting part (9a, 9b, 9c) lying in between.

**8.** The objective as claimed in claim 7, **characterized in that** one leaf spring (8) is articulated on said inner ring (3) and a second leaf spring (7) is articulated on said outer mount (1).

**9.** The objective as claimed in claim 8, **characterized in that** said two leaf springs (7,8) lie at least approximately parallel to each other.

**10.** The objective as claimed in any one of claims 1 to 5, **characterized in that** said adjusting joints (5) and their joint arms are provided with discrete solid-state joints (13, 13', 14, 14').

**11.** The objective as claimed in claim 10, **characterized in that** one solid-state joint (13) is articulated on said inner ring (3) and the second solid-state joint (13') is articulated on said outer mount (1).

**12.** The objective as claimed in claim 11, **characterized in that** said solid-state joints (13, 13', 14, 14') are respectively formed as constrictions.

**13.** The objective as claimed in any one of claims 1 to 12, **characterized in that** the manipulator members (10) are arranged in said outer mount (1).

**14.** The objective as claimed in claim 13, **characterized in that** said manipulator members (10) respectively act on an adjusting part (9a, 9b, 9c).

**15.** The objective as claimed in claim 14, **characterized in that** said manipulator members (10) are provided with adjusting screws (11), which are arranged in said outer mount (1) and act on said adjusting parts (9a, 9b, 9c).

**16.** The objective as claimed in claim 15, **characterized in that** said adjusting parts (9a, 9b, 9c) are provided with returning elements (12) acting against the adjusting direction of said adjusting screws (11).

**17.** The objective as claimed in claim 16, **characterized in that** said returning elements (12) are formed as spring elements.

**18.** The objective as claimed in any one of claims 1 to 17, **characterized in that** it is formed as a proejection objective in microlithography.

**19.** The objective as claimed in any one of claims 1 to 18, **characterized in that** the optical element is formed as a lens (4) or mirror.

**Revendications**

**1.** Objectif (2) comportant au moins un élément optique (4), qui est monté dans une bague intérieure (3), la bague intérieure (3) étant reliée à une monture extérieure (1), et un dispositif manipulateur (10) destiné à déplacer l'élément optique (4) en translation dans au moins une direction qui s'étend perpendiculairement à l'axe optique ou selon un angle quelconque par rapport à cet axe, la bague intérieure (3) étant reliée à la monture extérieure par l'intermédiaire d'au moins deux articulations d'ajustement (5) comportant des organes manipulateurs (10) et d'au moins une articulation de rotation (6), les au moins deux articulations d'ajustement (5) et l'au moins une articulation de rotation (6) étant pourvues de bras d'articulation (8) s'étendant dans une direction au moins approximativement tangentielle à la bague intérieure (3) et par l'intermédiaire desquels la bague intérieure (3) est reliée élastiquement à la monture extérieure (1), **caractérisé en ce que** les bras d'articulation (8) qui s'étendent au moins approximativement dans une direction tangentielle à la bague intérieure (3), vus des extrémités des bras d'articulation (8) et qui sont articulés sur la bague intérieure (3), sont tous orientés dans le sens des aiguilles d'une montre ou dans le sens inverse, et qu'ainsi les variations de longueur des bras d'articulation (8) dues à la température sont transformées en un même sens de rotation de la bague intérieure (3) par rapport à la monture extérieure (1) autour du centre de l'élément optique.

**2.** Objectif selon la revendication 1, **caractérisé en ce que** la au moins une articulation de rotation (6) constitue aussi une articulation d'ajustement (5) comportant un organe manipulateur (10).

**3.** Objectif selon la revendication 2, **caractérisé en ce qu'**il est prévu trois articulations d'ajustement (5) réparties sur la périphérie de la bague intérieure (3).

**4.** Objectif selon la revendication 3, **caractérisé en ce que** les articulations d'ajustement (5) sont réparties avec un écartement de 120° sur la périphérie.

**5.** Objectif selon la revendication 1, **caractérisé en ce que** la au moins une articulation de rotation (6) constitue aussi une articulation d'ajustement (5) comportant un organe manipulateur (10) et des bras d'articulation (7, 8).

**6.** Objectif selon l'une des revendications 1 à 5, **caractérisé en ce que** les bras d'articulation (7, 8) sont constitués par des ressorts à lames.

**7.** Objectif selon la revendication 6, **caractérisé en ce que** chaque articulation d'ajustement (5) est pourvue d'au moins deux ressorts à lames (7, 8), et d'une partie d'ajustement (9a, 9b, 9c) interposée entre ces derniers.

**8.** Objectif selon la revendication 7, **caractérisé en ce qu'**un ressort à lame (8) est articulé sur la bague intérieure (3) et qu'un second ressort à lame (7) est articulé sur la monture extérieure (1).

**9.** Objectif selon la revendication 8, **caractérisé en ce que** les deux ressorts à lames (7, 8) s'étendent au moins à peu près parallèlement entre eux.

**10.** Objectif selon l'une des revendications 1 à 5, **caractérisé en ce que** les articulations d'ajustement (5) et leurs bras d'articulation sont pourvus d'articulations monolithiques distinctes (13, 13', 14, 14').

**11.** Objectif selon la revendication 10, **caractérisé en ce qu'**une articulation monolithique (13) est articulée sur la bague intérieure (3) et la seconde articulation monolithique (13') est articulée sur la monture extérieure (1).

**12.** Objectif selon la revendication 11, **caractérisé en ce que** les articulations monolithiques (13, 13', 14, 14') sont constituées par des amincissements.

**13.** Objectif selon l'une des revendications 1 à 12, **caractérisé en ce que** les organes manipulateurs (10) sont disposés dans la monture extérieure (1).

**14.** Objectif selon la revendication 13, **caractérisé en ce que** les organes manipulateurs (10) attaquent chacun une partie d'ajustement (9a, 9b, 9c).

**15.** Objectif selon la revendication 14, **caractérisé en ce que** les organes manipulateurs (10) sont pourvus de vis d'ajustement (11) disposées dans la monture extérieure (1) et qui attaquent les parties d'ajustement (9a, 9b, 9c).

**16.** Objectif selon la revendication 15, **caractérisé en ce que** les parties d'ajustement (9a, 9b, 8c) sont pourvues d'éléments de rappel (12) agissant à l'inverse du sens de l'ajustement des vis d'ajustement (11).

**17.** Objectif selon la revendication 16, **caractérisé en ce que** les éléments de rappel (12) sont constitués par des éléments élastiques.

**18.** Objectif selon l'une des revendications 1 à 17, **caractérisé en ce qu'**il constitue un objectif de projection de microlithographie.

**19.** Objectif selon l'une des revendications 1 à 18, **caractérisé en ce que** l'élément optique est constitué par une lentille (4) ou par un miroir.

Fig. 1

Fig. 2

Fig. 3a

Fig. 3b

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19901295 A1